# EUROPEAN PATENT APPLICATION

(11) **EP 0 690 367 A1**
(43) Date of publication of application: **03.01.1996**
(21) Application number: 95303349.5
(22) Date of filing: 18.05.1995
(51) Int. Cl.: G06F 3/033

(54) **User interface for managing media spanning for database tables**

(30) Priority: 27.06.1994 US 265908
(71) Applicant: INTERNATIONAL BUSINESS MACHINES CORPORATION, Armonk, NY 10504 (US)
(72) Inventor: Li, Shih-Gong, Austin, Texas 78750 (US); Shrader, Theodore Jack London, Austin, Texas 78728 (US)
(74) Representative: Moss, Robert Douglas

(57) **Abstract**

A graphical user interface provides a comprehensive, topographical map of all the table parts in a database which spans multiple virtual and/or real storage media. This interface allows a user, such as a database administrator, a view of all the files that belong to a table of the database and facilitates managing media spanning for the database tables. The user interface allows a user to drag a created table part entry from one directory location and drop it on another, without regard to media boundaries. This direct manipulation minimizes keyboard input since no typing of new directory paths is required. The user interface for database table media spanning provides a user interface design based on a model that matches the user (i.e., database administrator) view or perspective. It offers the user a comprehensive, topographical map of all the table parts in the database in a manner that all the files (or parts of the database) that belong to a table can be quickly and uniquely identified. Direct manipulation techniques are extensively used, promoting ease of use by minimizing keyboard input. For example, the user can drag a created table part entry from one directory location and drop it on another. No typing in new directory paths are required. To assist in discovering a performance problem, the database administrator can use the database table media spanning to graphically view where all the tables in the database are located.

## Description

### Field of the Invention

The present invention generally relates to graphical user interfaces for computers and, more particularly, to an interface for database table media spanning which presents the user with a comprehensive, topographical map of all the table parts in a database.

### Description of the Prior Art

Personal computers (PCs) are now widely used by many persons for a variety of applications. Like earlier mainframe and minicomputers, one of the most important applications run on a personal computer is a database program. Such programs are the basis of accounting programs, personnel record keeping, client contacts and telephone directories, and genealogical records, among other things. Initially, personal computers had limited amount of disk storage space so that databases maintained on them were necessarily limited. Also, database programs required a certain level of programming skill to set up and use effectively, which meant that the number of users was also limited. But recently, the amount of disk storage space available on personal computers has increased dramatically, and the user interface to the available database programs has become more intuitive allowing a larger number of users to effectively utilize the databases.

The increase in disk storage space is due to a number of factors. First, there have been produced hard disks which have very high densities in very small packages so that it is now common for a personal computer to have a hard disk of 500 megabytes (MBs) or more. These very large hard disks are often partitioned into a number of partitions which are treated as separate, virtual hard disks. Personal computers with what had been thought to be more than adequate disk capacity only a short time ago have been upgraded by adding a second hard disk drive, providing separate, physical hard disks. In either case, the virtual hard disks or physical hard disks are a combination of the two are typically designated as the "C:", "D:", "E:", etc. drives. In addition, the Small Computer System Interface (SCSI) which has been standard for some time on Apple® computers has now become an accepted standard on Pcs. The SCSI interface allows several hard disks to be daisy chained, thus permitting easy expansion of the computer's storage capacity.

The user interfaces now commonly implemented are so-called Graphical User Interfaces (GUI) in which databases are represented as file icons in hierarchical tree structures, allowing a user to select and manipulate files using a mouse controlled cursor. Operations that once required a fairly sophisticated level of programming skill can now be performed by users with no programming experience by simply selecting files, selecting operations, dragging and dropping icons, and similar functions now commonly employed in such interfaces.

As a result in the improvements in disk storage space and the easy use of modern database programs, many users have generated very large databases, some approaching or exceeding the capacity of a single hard disk or partition. The tables generated for these databases which allow access to the data contained in the databases often are large, hindering ready access. With the increasing amounts of data in tables, users have asked for the ability to split their database tables, both their actual data and supporting characteristics, into different directories in partitions of a hard drive or across different media drives. However, if a database has the ability to split tables in this fashion, the user still needs a topographical map of where the tables are located and an easy way to continue dividing a table across directories or consolidating a table into fewer, larger parts. An interface that provides such an instant map and exploits a graphical front end would boost the productivity of a database administrator.

### DISCLOSURE OF THE INVENTION

According to the invention, there is provided a user interface for database table media spanning which allows a user, such as a database administrator, to drag a created table part entry from one directory location and drop it on another. This direct manipulation minimizes keyboard input since no typing of new directory paths is required to move the location of a table part or to create a new table part. The user interface can be used by the database administrator to graphically view where all the tables in the database are located.

The user interface for database table media spanning is unique because it provides a user interface design based on a model that matches the user (i.e., database administrator) view or perspective. It offers the user a comprehensive, topographical map of all the table parts in the database in a manner that all the files (or parts of the database) that belong to a table can be quickly and uniquely identified. Direct manipulation techniques are extensively used, promoting ease of use by minimizing keyboard input. For example, the database administrator can drag a created table part entry from one directory location and drop it on another. No typing in new directory paths are required. To assist in discovering a performance problem, the database administrator can use the database table media spanning to graphically view where all the tables in the database are located.

### BRIEF DESCRIPTION OF THE DRAWINGS

The invention will now be described, by way of example only, with reference to the accompanying drawings in which:
Figure 1 is a block diagram showing a hardware configuration on which the subject invention may be implemented;
Figure 2 is a facsimile of an example of a media spanning primary window display in one implementation of the invention;
Figure 2A is an illustration of the icons which are used in the primary window display shown in Figure 1;
Figure 3 is a facsimile of a table list secondary window which presents a list of the tables in the database;
Figure 4 is a facsimile of a table details secondary window which appears when a table is selected;
Figures 5A to 5D, taken together, are a flow diagram showing the logic of the media spanning process according to a preferred embodiment of the invention wherein Figure 5A is the initialization phase of the process and Figures 5B to 5D show the main program loop; and
Figure 6 is block diagram illustrate the data structures of the table parts used in the practice of the invention.

### DETAILED DESCRIPTION OF A PREFERRED EMBODIMENT OF THE INVENTION

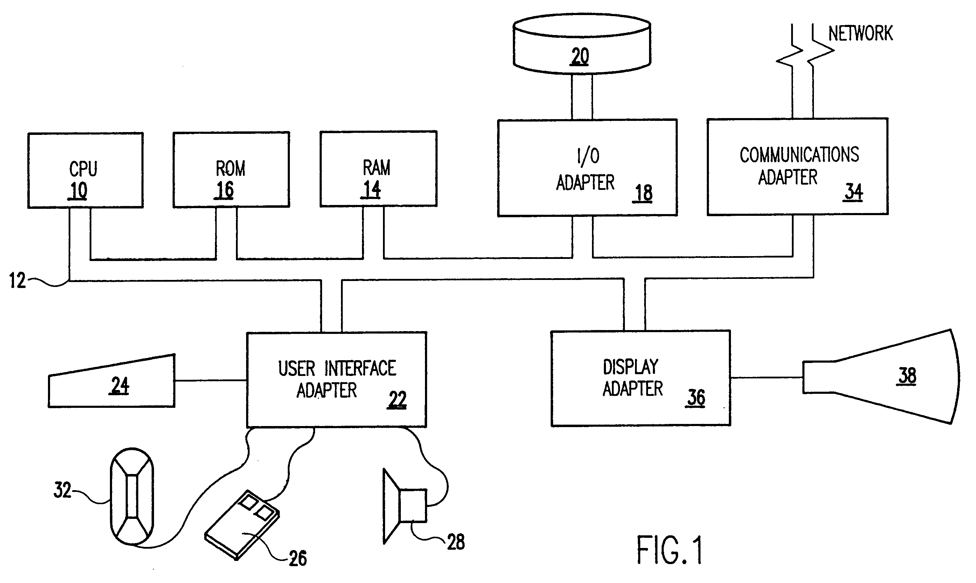

Referring now to the drawings, and more particularly to Figure 1, there is shown a representative hardware environment on which the subject invention may be implemented. This hardware environment may be a personal computer such as the International Business Machines (IBM) Corporation's PS/2 Personal Computers or a workstation such as IBM's RS/6000 Workstations (IBM PS/2, and RS/6000 are trademarks of IBM Corp). The hardware includes a central processing unit (CPU) 10, which may be a complex instruction set computer (CISC) microprocessor such as the Intel 386, 486 or Pentium microprocessors or a reduced instruction set computer microprocessor such as IBM's PowerPC microprocessor (PowerPC is a trademark of IBM Corp). The CPU 10 is attached to a system bus 12 to which are attached a random access memory (RAM) 14, a read only memory (ROM) 16, an input/output (I/O) adapter 18, and a user interface adapter 22. The RAM 14 provides temporary storage for application program code and date, while ROM 16 typically includes the basic input/output system (BIOS) code. The I/O adapter 18 is connected to one or more Direct Access Storage Devices (DASDs), here represented as a disk drive 20. The disk drive 20 typically stores the computer's operating system (OS) and various application programs, each of which are selectively loaded into RAM 14 via the system bus 12. The I/O adapter 18 may support, for example, the Integrated Device Electronics (IDE) interface standard or the SCSI interface standard. In the former case, the I/O adapter 18 typically will support two disk drives in parallel, designated as drives "C:" and D:". In the latter case, the I/O adapter 18 will support up to nine disk drives connected in a daisy chain. The user interface adapter 22 has attached to it a keyboard 24, a mouse 26, a speaker 28, a microphone 32, and/or other user interface devices such as a touch screen device (not shown). Such touch screen device would optionally be installed on the display 38, here represented as a cathode ray tube (CRT) display but which may be a liquid crystal display (LCD). The display 38 is connected to the system bus 12 via a display adapter 34. Optionally, a communications adapter 34 is connected to the bus 12 and to a network, such as a local area network (LAN), such as IBM's Token Ring LAN. Alternatively, the communications adapter may be a modem connecting the personal computer or workstation to a telephone line as part of a wide area network (WAN).

In the following description of a preferred implementation of the invention, the splitting of tables across hard drive partitions is for the case of databases running under IBM's OS/2 operating system for personal computers. For databases which run under a Unix operating system, such as IBM's AIX operating system, the physical locations of a table are not as relevant as the logical locations (AIX is a trademark of IBM Corp). For example, the OS/2™ operating system would refer to the "C:" and "D:" hard drives along with a directory of those drives, while the AIX operating system would merely be concerned with the directories. The physical drive that the table is split across is not pertinent at this level. The implementation described concentrates on how such a media spanning user interface is constructed for an OS/2™ database. An AIX database is a subset of this design, since it would exclude disk drive references. Also, this design would need to be modified to include the characteristics, parameters, and the like that the actual database implementation of the media spanning function would have.

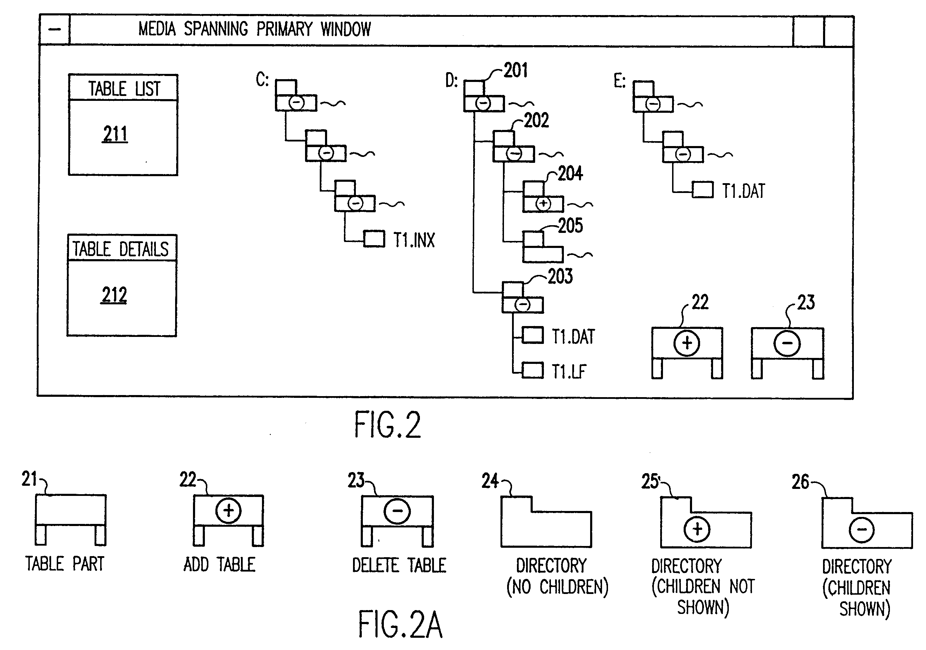

Referring now to Figure 2, there is shown an example of a media spanning primary window on a display screen of a personal computer. This window shows a tree structure of the drives to which the user is connected (i.e., the root of the tree) along with their directories (i.e., the branches of the tree) in the sort order that they appear on the disk or disks (i.e., virtual or physical or a combination of the two). The root and directory icons are represented by folders. The user can select a closed folder and expand it, thus showing all its subdirectories and any files associated with a selected spanned table. Alternatively, the user can select an open folder to collapse its subdirectories and files into a single folder. This works much in the same way as the directory tree structure provided in the OS/2 File Manager, but with some important distinctions. Each drive, such as "C:", has its own drive tree. Database administrators can add or remove drive trees from the primary window by selecting them from the action bar or other mechanism. This gives database administrators the ability to customize individual user environments by focusing on the drives and directories that they are interested in. For example, in IBM's OS/2 LAN Server Network Manager or in the Distributed File System (DFS) of IBM's AIX™ OS, there may be a number of drives and directories in the system which are not of interest to the user of a particular workstation, and the database administrator would choose not to have those drives and directories displayed.

Additional information may be displayed in the primary window shown in Figure 2. For example, the physical capacity, both total and available, of each medium (drive or volume) are displayed to provide more information to the user (database administrator) for better media usage.

Figure 2A shows several icons which are used in the media spanning primary window shown in Figure 2. These icons are basically of two types; tables and directories. The table icons are a table part icon 21, an add table icon 22 and a delete table icon 23. The table part icon 21 is used, together with the directory icons, to form the tree structures in the media spanning primary window display, while the add table icon 22 and the delete table icon 23, shown in the lower right hand corner of Figure 2, are used to select actions to be taken on the tree structures; that is, to either add or delete tables from the tree structures. The directory icons include a directory with no children icon 24, a directory with children (children not shown) icon 25 and a directory with children (children shown) icon 26. "Children" are subdirectories of table part objects. Thus, referring back to Figure 2 and in particular to the tree structure for the D: drive, there is shown a root directory 201 to which are connected the directories 202 and 203, both of which are represented by the icon 26. Attached to the directory 202 are two additional directories 204 and 205, respectively represented by the icons 25 and 24. Attached to the directory 203 are two table parts, each represented by the icon 21. The directory 203 is "open" and has table parts in its directory; therefore, the table icons for this directory are displayed. These table icons can be selected by the user for display.

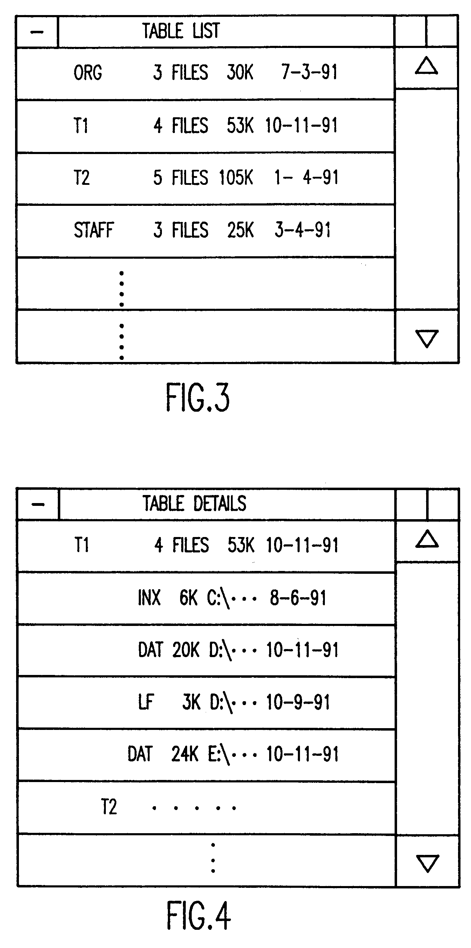

In addition to the tree structures shown in Figure 2, the media spanning primary window also displays one or more secondary windows. For example, in Figure 2, a Table List window 211 and a Table Details window 212 are shown. When a user wants to work with a table, the table can be chosen from the Table List window 211, shown in more detail in Figure 3. The Table List window presents a list of tables in the database along with the size of the table and other attributes. Selecting a table from the list will highlight all its "parts" (i.e., file icons) on the directory tree structures in the primary window. If part of the table exists in a directory that is not shown, either a closed directory will be expanded or another directory drive tree will be added. Note that the interface may prohibit the user from closing a directory folder icon that contains a file belonging to the table selected or removing a drive tree that contains such a highlighted table part. This insures that all files are shown on the screen.

As mentioned before, parts of a spanned table will be shown as files on the directory tree. Note that these are the only files that will be shown on the trees; CONFIG.SYS files and all other irrelevant files will not be shown. Table part files can be distinguished from other files either by a binary header or special, unique filename extensions. The name of the file appears next to its file icon. For example, TABLE1.ONE, TABLE1.TWO, TABLE1.DAT, TABLE1.INX, etc. The parts of more than one table can be shown in the primary window. The current (i.e., selected) table will have all of its filenames and file icons in reverse video to distinguish it from the others. Alternatively, the database administrator could make all the filenames of a table a different color or font than the other tables, thus giving the user a greater understanding of where the tables are distributed.

When a table is selected, the Table Details window 212, shown in more detail in Figure 4, appears, if it is not already visible. If it is already open, the selected table will be added to the list (if it is new) or highlighted (if it already exists in the list). This window gives the user a clustered list of all the files of a particular table with its name, directory entries, and size. Other attributes unique to a database table implementation could be shown here as well. The user can stroll through this list to see all the files and their attributes that belong to a table without having a navigate around the primary window. At the top of each cluster will be the table name along with the summed size of all the files and the total number of files that the table is spread across. A cluster is defined as the entry for the table name and its table parts.

Also located in the primary window, shown in Figure 2, are the Create and Delete Part icons 22 and 23 (Figure 2A). They can be moved to different locations in the window, but they cannot be removed. To add a new "part" of the table, the Create Part icon is dragged to a directory icon and dropped on that icon. An Add Part dialog box will appear with the filename and its directory path. Other parameters unique to the database's implementation of media spanning also go here. The Delete Part icon works in a similar fashion. To change a table part, the database administrator double clicks on the table part's icon, and a Charge Part dialog box appears. This dialog box contains all the information in the Add Part dialog box with additional read-only information, like the size of the file.

Instead of using direct manipulation to create or delete table parts, database administrators can select the folder that they wanted to add a table part to and select the Add Part action from the action bar. To delete a part, the database administrator can select the file icon and select the Delete Part action from the action bar. Alternatively, the database administrator can select the delete button on the Change Part dialog box or select the icon and press the delete key. As a further alternative, each file icon can have a context menu activated by pressing and holding down the second mouse button. This menu would allow the database administrator to choose from the Change or Delete Part actions. A directory icon would have a context menu with the Add Part action.

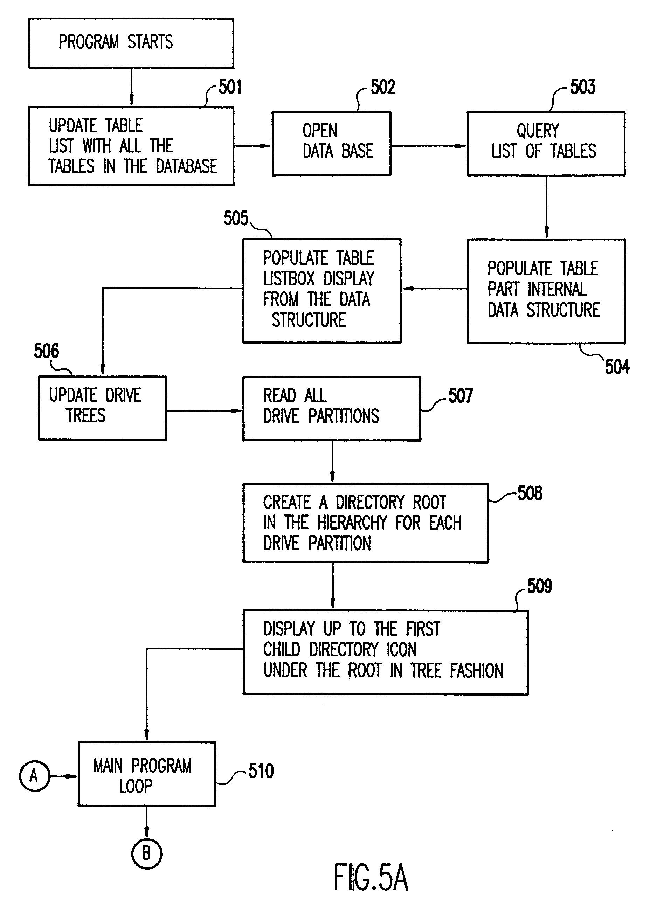

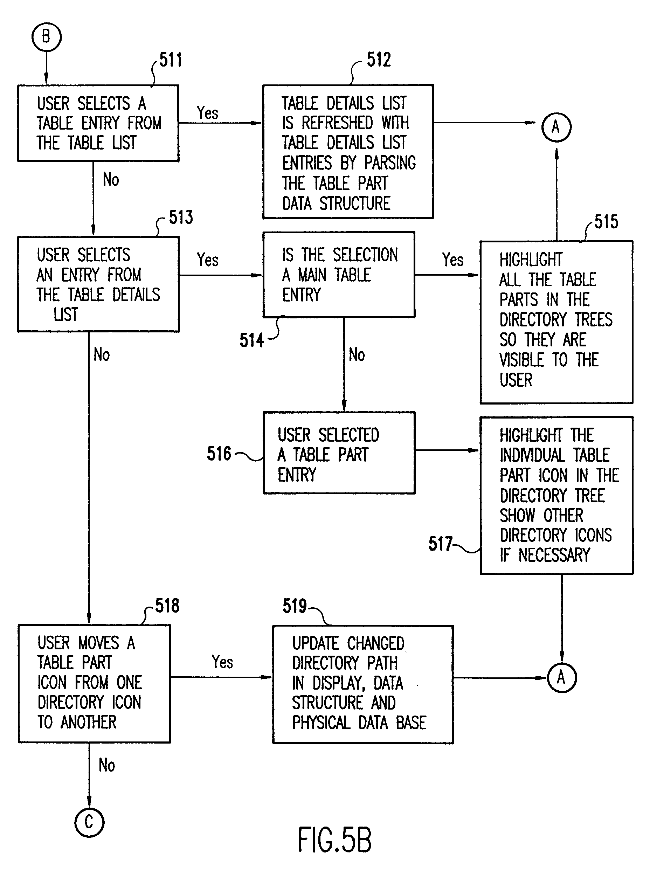

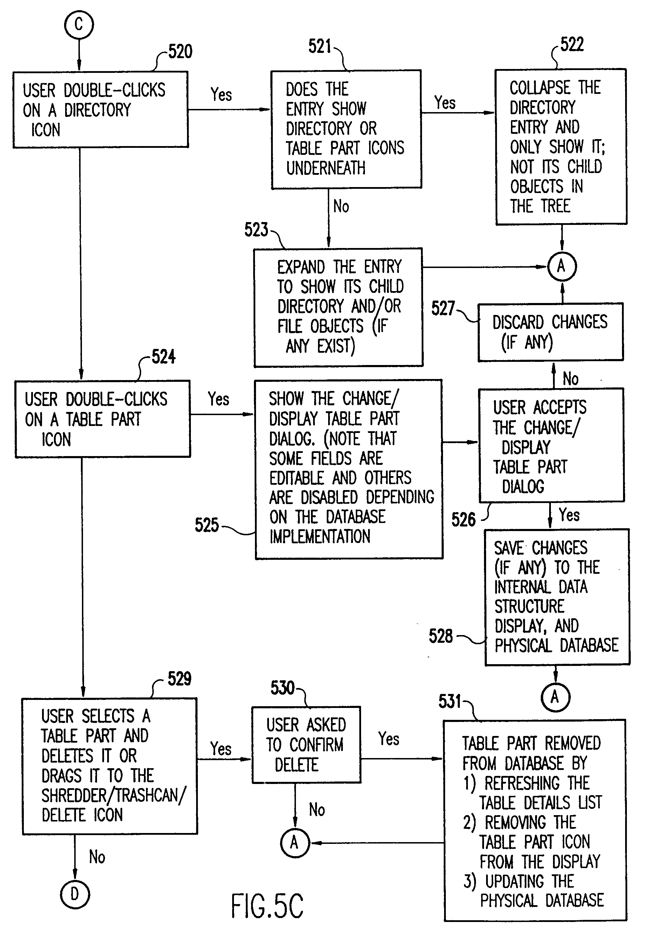

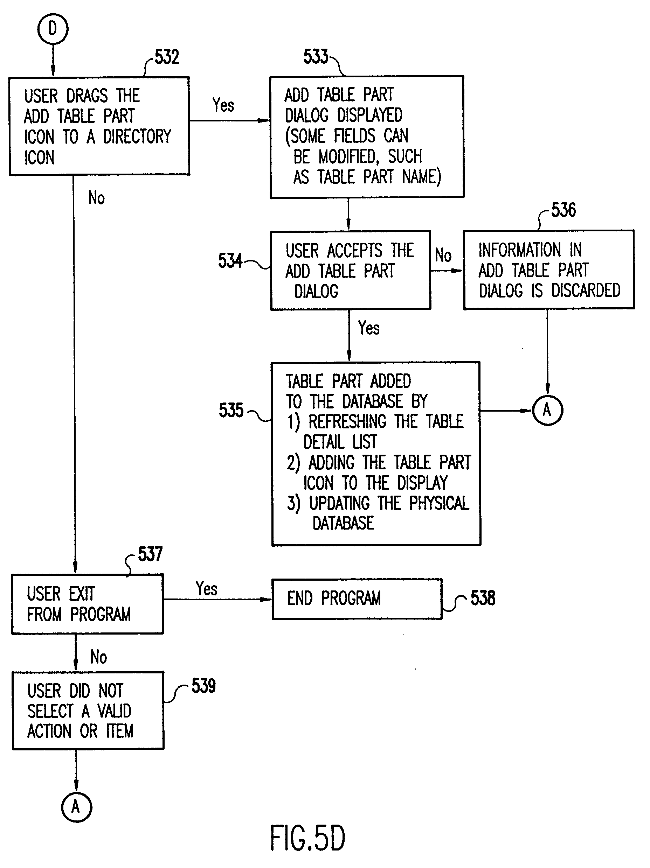

The operation of the invention is best illustrated by the flow diagram shown in Figures 5A to 5D wherein connectors in the form of letters in circles connect the various parts of the process. Figure 5A shows the initialization process. When the program starts, the table list is updated in function block 501 with all the tables in the database. Next, a database is opened in function block 502, and a query list of tables is generated in function block 503. The table part internal data structure is populated in function block 504, and the table list box display is populated from the data structure in function block 505. At this point in the program, the drive trees can be updated in function block 506. All drive partitions of the disk drive(s) are read in function block 507. A directory root in the hierarchy for each drive partition is created in function block 508. the first child directory icon under the root is displayed in tree fashion in function block 509. This completes the initialization process and the main program loop is entered in function block 510. The process leads to connector "B" at the top of Figure 5B, to which reference is next made.

Figures 5B to 5D show the logic of the main program loop, the process being a user interactive process in which the program detects a series of possible user inputs in the form of single or double-clicks on a mouse button to either select an item or invoke an action or other type of mouse cursor aided action such as a drag-and-drop action. Thus, in Figures 5B to 5D, the main program loop is devoted to detecting a possible user input and then either performing an invoked action or providing a dialog box prompting the user for further input.

In Figure 5B, the first part of which is to detect in decision block 511 whether a user has selected a table entry from the table list. If so, the table details list is refreshed with table details list entries by parsing the table part data structure in function block 512, and then the process returns, via connector "A" to the start of the main program loop 510 in Figure 5A. If, however, the user does not select a table entry from the table list but instead selects an entry from the table details list as detected in decision block 513, then a further test is made in decision block 514 to determine if the selection is a main table entry. If so, all table parts in the directory trees are highlighted in function block 515 so they are visible to the user, and then a return is made via connector "A" to the start of the main program loop 510 in Figure 5A. On the other hand, if the user has not selected a main table entry as determined in decision block 514, the user is declared to have selected a table part entry in function block 516. In this case, the individual table part icon in the directory tree is highlighted in function block 517, and a return is made via connector "A" to the start of the main program loop 510 in Figure 5A. When highlighting an individual table part icon in function block 517, other directory icons may optionally be displayed. If the user moves a table part icon from one directory icon to another as detected by decision block 518, the changed directory path in the display, the data structure and the database are all updated in function block 519 before a return to the main program loop is made via connector "A". Otherwise, the process goes to Figure 5C via connector "C", to which reference is next made.

In Figure 5C, when a user double-clicks on a directory icon, this is detected in decision block 520. A further test is made in decision block 521 to determine if the entry double-clicked on shows directory or table part icons underneath. If so, the directory entry is collapsed in the display in function block 522 so that only the directory icon is shown without its child objects in the tree. Otherwise, the directory entry is expanded in function block 523 so that the its child directories and file objects (if any) are displayed in a tree structure. In either case, a return to the main program loop is then made via the connector "A". When a user double-clicks on a table part icon, this is detected in decision block 524. The change/display table part dialog is shown in function block 525. The system then waits for a further user input as to whether the change/display table part dialog is accepted in decision block 526. If not, any changes are discarded in function block 527 before a return is made to the main program loop; otherwise, the changes to the internal data structures, the display and the physical database are saved in function block 528 before a return is made to the main program loop via connector "A". If the user selects a table part and deletes it or drags it to the shredder/trash can delete icon, this is detected in decision block 529. In such case, the user is asked to confirm the delete action in decision block 530. If the user confirms the delete action, the table part is removed from the database by (1) refreshing the table details list, (2) removing the table part icon from the display, and (3) updating the physical database in function block 531. In either case, a return is made to the main program loop via connector "A".

Turning next to Figure 5D, if the user drags the add table part icon to a directory icon, this is detected in decision block 532. The add table part dialog box is displayed in function block 533. The process then waits for a user input to determine in decision block 534 whether the user accepts the add table part dialog. If so, the table part is added to the database by (1) refreshing the table details list, (2) adding the table part icon to the display, and (3) updating the physical database in function block 535; otherwise, the information in the add table part dialog is discarded in function block 536. In either case, a return is made to the main program loop via connector "A". If the user exits from the program, this detected in decision block 537, and the program ends in function block 538; otherwise, the user is declared in function block 539 to have not selected a valid action or item, and a return is made to the main program loop via connector "A".

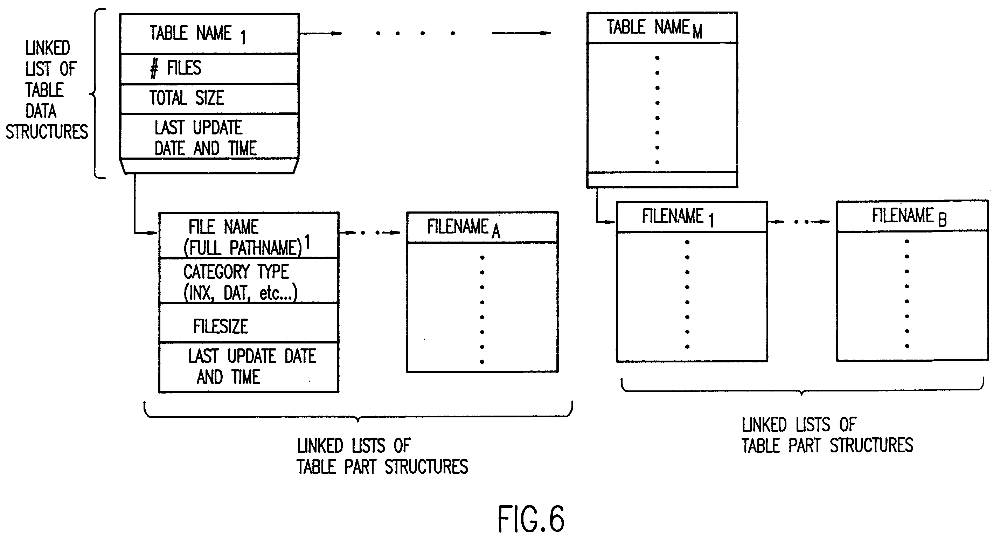

The data structures of the database which support the process illustrated by the flow diagram of Figures 5A to 5D are illustrated in Figure 6. The data structures are in the form of tables of two types; table data structures and table part structures. The table data structures, here shown as a linked list of structures 1 to M, have entries identifying the table name, the number of files, total size, and the last update (date and time). Other attributes unique to the database's implementation of the table could be included in any of these structures. The table part structures are pointed to by a pointer file in a corresponding table data table and include entries identifying the file name, category type (INX, DAT, etc.), file size, and the last update (date and time). Again, other attributes unique to the database's implementation of the table could be included in any of these structures. The example here shows a linked list of table part structures 1 to A for table data structure 1. There is also a linked list of table part structures from 1 to b for table data structure M. Each table part structure will have a linked list of one or more table part structures.

Further refinements to the invention are possible. For example, the database administrator may be allowed to do the following operations: Move, Split and Merge.

For each Move operation, the media spanning management system checks to see if the target medium has enough capacity to allocate the to-be-moved file(s). The management system provides this information back to the database administrator and requests confirmation (such as via a dialog box) when necessary. For a Move operation with multiple files selected, this capacity checking can be crucial. The management system should not perform a Move operation if the target medium does not have enough capacity for all the selected files together.

For a Split operation, the database manger can select a file and choose to split a file into several files. The means of specifying a Split operation includes choosing from a pull-down menu, a key-mouse combination, or other similar actions.

For a Merge operation, the database administrator first selects multiple files and chooses the Merge operation. The system checks to see if the selected files can be merged. If the selected files are not currently residing in the same medium, the system prompts for the target medium. After a target medium is specified, the system will check if sufficient capacity is available for the merge. When the target medium does not have enough space, the system will indicate this information to the user and terminate the merge operation. When the space is available, the system may optionally prompt the user for confirmation. Again, the means of specifying a Merge operation includes choosing from a pull-down menu, a key-mouse combination, or other similar actions.

As mentioned, for some operations, multiple selections are supported. In addition to traditional ways of multiple selections, the media spanning management system can support multiple selections as multiple-select the same type of files of a table, multiple-select all files of a table, multiple-select the same type of files of a database, or multiple-select all files of a database. Thus, by combining the traditional multiple selections and the above domain-specific multiple selections, the user can select the desired files for a specific operation more easily.

By selecting a directory icon, the user can perform operations for all the files residing in the selected subdirectory. This allows the moving of an entire subdirectory from one place to another place and maintaining the same structural relationships among the files in the selected directory.

When the user selects an entry in the Table List, it is equivalent to selecting all the files of that table. The user can then perform operations on all the files of that table together. For example, when a Table List entry of "ORG Table" is selected for operation (say, via key-mouse combination to differentiate it from the regular simple selection), all the file icons belonging to that table will be highlighted.

## Claims

1. A user interface for managing media spanning for database tables on a computer system wherein a data structure for the database is stored in multiple virtual and/or physical media, said data structure comprising a table list of all tables in the database, said user interface being implemented on the computer system including a display (38) for displaying objects and a cursor controlled by a mouse (26) which can be used to select a displayed object by a single click of a mouse button, to invoke an action by a double click of a mouse button, or a drag-and-drop action by selecting an object by pressing and holding a mouse button and then moving the selected object across the display and releasing the mouse button, said user interface comprising the steps of:
initializing (501) the data base by updating the table list and creating (508) a directory root in a hierarchical tree structure for each of said multiple media;
displaying (509) a root directory icon for each of said multiple media in a media spanning primary window;
detecting a user double-click on a directory icon and if the directory icon does not show directory or table part icons in a hierarchical tree structure displayed under the directory icon, expanding the display to show child directory icons and/or table part icons if they exist, otherwise, collapsing the hierarchical tree structure to show only the directory icon;
detecting a user double-click on a table part icon and prompting the user to input changes to fields of a table corresponding to the table part icon;
detecting (518) a user drag-and-drop action of a table part icon from one directory icon to another directory icon and updating (519) a resulting changed directory path in the hierarchical tree structure display and updating the data structure of the database;
displaying an add table part icon and a delete table part icon in said media spanning primary window;
detecting (532) a user drag-and-drop action of the add table part icon to a directory icon and prompting (533) the user to input changes to fields of a table to be added to a directory corresponding to the directory icon; and
detecting (516) a user selection of a table part icon in a directory tree and a user selection of the delete table part icon and removing the selected table part icon from the media spanning primary window display and updating the database.

2. A user interface as claimed in claim 1 further comprising the steps of:
displaying a table list secondary window in said media spanning primary window;
displaying a table details list secondary window in said media spanning primary window;
detecting a user selection from said table list secondary window and refreshing the table details list with table details list entries by parsing the table data structure; and
detecting a user selection from said table details secondary window and if the user selection is a main table entry, highlighting all table parts in the directory trees, but if the user selection is a table part entry, highlighting the individual table part icon in the directory tree.

3. A computer system for managing media spanning for database tables on the computer system comprising:
a central processing unit (10) connected to a system bus (12);
a mouse (26) controlled by a user and connected to said system bus;
multiple virtual and/or physical media connected to said system bus and storing a data structure for the database, said data structure comprising a table list of all tables in the database;
a display (38) connected to said system bus and displaying objects in a graphic user interface and a cursor controlled by said mouse which can be used by the user to select a displayed object by a single click of a mouse button, to invoke an action by a double click of a mouse button, or a drag-and-drop action by selecting an object by pressing and holding a mouse button and then moving the selected object across the display and releasing the mouse button;
said central processor being programmed to initialize (501) the data base by updating the table list and creating (508) a directory root in a hierarchical tree structure for each of said multiple media, to display (509) a root directory icon for each of said multiple media in a media spanning primary window, to detect a user double-click on a directory icon and if the directory icon does not show directory or table part icons in a hierarchical tree structure displayed under the directory icon, expanding the display to show child directory icons and/or table part icons if they exist, otherwise, collapsing the hierarchical tree structure to show only the directory icon, to detect a user double-click on a table part icon and prompting the user to input changes to fields of a table corresponding to the table part icon, to detect (518) a user drag-and-drop action of a table part icon from one directory icon to another directory icon and updating (519) a resulting changed directory path in the hierarchical tree structure display and updating the data structure of the database, to display an add table part icon and a delete table part icon in said media spanning primary window, to detect (532) a user drag-and-drop action of the add table part icon to a directory icon and prompting (533) the user to input changes to fields of a table to be added to a directory corresponding to the directory icon, and to detect (516) a user selection of a table part icon in a directory tree and a user selection of the delete table part icon and removing the selected table part icon from the media spanning primary window display and updating the database.
